# EUROPEAN PATENT SPECIFICATION

(11) **EP 4 397 430 B1**
(45) Date of publication and mention of the grant of the patent: **03.06.2026**
(21) Application number: 22884065.8
(22) Date of filing: 20.10.2022
(51) Int. Cl.: B23K 26/21, B23K 37/04, B23K 26/14, F16B 21/16, B23K 26/22, B23K 101/38

(54) **LASER WELDING DEVICE**
LASERSCHWEISSVORRICHTUNG
DISPOSITIF DE SOUDAGE AU LASER

(30) Priority: 20.10.2021 KR 20210140231
(43) Date of publication of application: 10.07.2024
(73) Proprietor: LG Energy Solution, Ltd., Seoul 07335 (KR)
(72) Inventor: HAM, Seok Hong, Daejeon 34122 (KR)
(74) Representative: Plasseraud IP
(86) International application number: PCT/KR2022/016043
(87) International publication number: WO 2023/068843

(56) References cited:
- WO-A2-2019/014293
- CN-A- 103 717 917
- CN-U- 211 680 581
- GB-A- 971 537
- JP-A- H 106 062
- KR-A- 20140 065 776
- KR-A- 20150 079 301
- KR-A- 20210 048 096
- US-A1- 2014 116 057
- US-A1- 2020 147 734
- US-A1- 2021 299 801

## Description

The present invention relates to a laser welding device, see claim 1, that welds an electrode tab extending from an electrode assembly to an electrode lead having one end extending outside a pouch and the other end disposed inside the pouch when manufacturing a secondary battery, and more particularly, to a laser welding device, in which an upper mask is improved in convenience of replacement.

### BACKGROUND ART

Lithium secondary batteries that are chargeable/dischargeable and lightweight and have high output densities are being widely used as energy sources for various devices.

In addition, lithium secondary batteries have attracted considerable attention as power sources for hybrid electric vehicles (HEVs), plug-in hybrid electric vehicles (PHEVs), battery electric vehicles (BEVs), and electric vehicles (EVs), which have been developed to solve limitations, such as air pollution and green-house gases, caused by existing internal-combustion engine vehicles that use fossil fuels, such as, gasoline and diesel vehicles.

In general, such a secondary battery has a structure comprising an electrode assembly having a structure in which electrodes (a negative electrode and a positive electrode) and a separator are alternately laminated, an electrolyte allowing ions to move to the electrodes, and a case in which the electrode assembly and the electrolyte are accommodated.

Also, the lithium secondary battery may be manufactured in various shapes. Representatively, the lithium secondary battery may be manufactured in a cylinder type, a prismatic type, or a pouch type.

Among them, the pouch-type secondary battery is manufactured by sealing an opened portion of a pouch when an electrode assembly, which charges and discharges electric energy, and an electrolyte are embedded in the pouch.

The electrode assembly is provided by alternately stacking negative electrodes, positive electrodes, and separators and is manufactured so that a negative electrode tab protruding from the negative electrodes and a positive electrode tab protruding from the positive electrodes protrude from the same side or respectively protrude opposite sides. In addition, each of the electrode tabs (positive electrode tab and negative electrode tab) is mounted in the pouch in a state of being welded to electrode leads (positive electrode lead and negative electrode lead).

Thus, in a state in which the electrode lead and the electrode tab are welded to each other, the electrode lead has one side connected to the electrode tab within the pouch and the other side protruding to the outside the pouch so as to be electrically connected to an external device.
US 2021/299801 discloses a jig for tack welding of battery cell electrode lead. GB 971 537 discloses a quick release fastener.

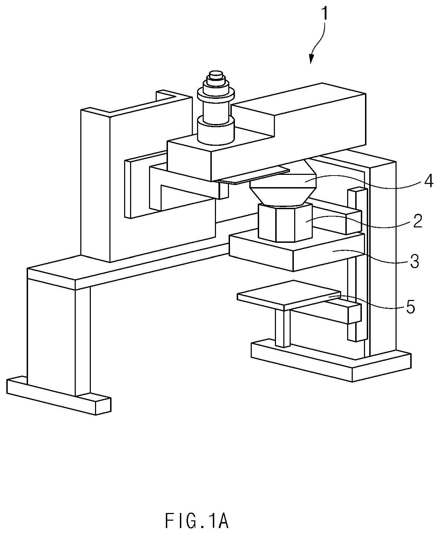

The electrode lead and the electrode tab are welded through a laser welding device 1 as illustrated in FIG. 1a.

The laser welding device 1 includes a lower mask 5 on which an electrode lead L and an electrode tab T are seated, a laser irradiator 4 irradiating laser to a point at which the electrode lead L and the electrode tab T, which are seated on the lower mask 5, are stacked, a base plate 2 coupled to a lower portion of the laser irradiator 4, and an upper mask 3 detachably coupled to the base plate 2.

In addition, the laser irradiated from the laser irradiator 4 irradiates through an opening hole 2c of the base plate 2 and an opening hole 3d of the upper mask 3 so that the welding is performed. That is, an upper end 3e of the opening hole 3d of the upper mask 3 communicates with the opening hole 2c of the base plate 2. In addition, the upper mask 3 has a shape that is gradually narrowed toward a lower end thereof, and a lower end 3f of the opening hole 3d is disposed above a welding point W of the electrode lead L and the electrode tab T.

In addition, during laser welding, an inert gas is injected to prevent scattering of spatter and improve welding quality.

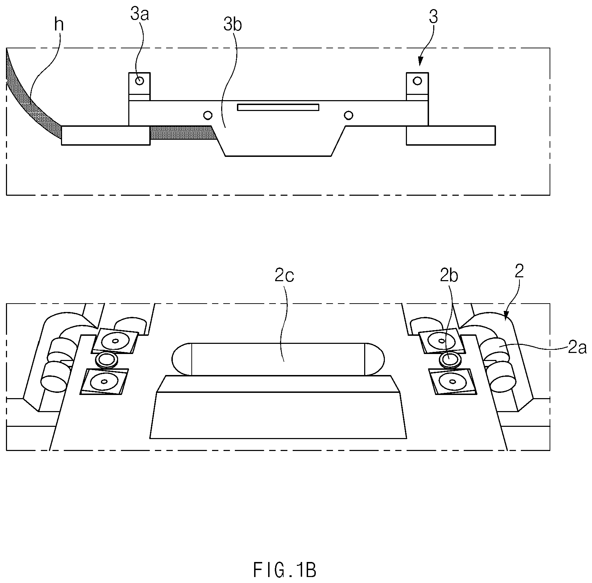

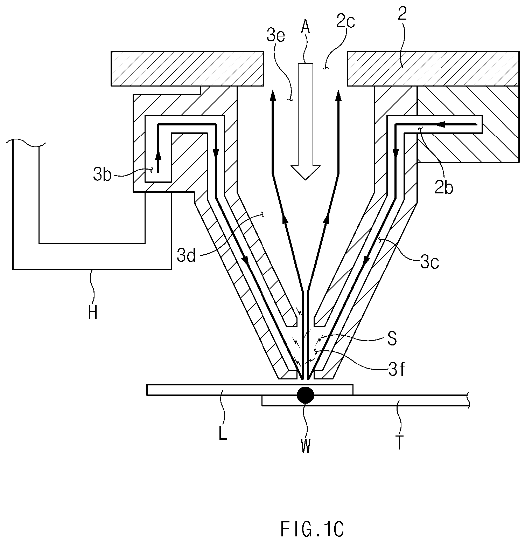

Referring to FIG. 1b, which illustrates a shape (above) of a side surface of an upper mask 3 according to the related art and a state (below) in which the base plate 2 is disposed upside down, and FIG. 1c, which illustrates a cross-sectional view of a state in which the upper mask 3 according to the related art is coupled to the base plate 2, a locking part 3a protrudes from the upper mask 3 according to the related art, and a catcher 2a, in which the locking part 3a is inserted and fixed, is provided on the base plate 2. That is, in the structure according to the related art, the base plate 2 and the upper mask 3 are attached to and detached from each other through coupling and separation of the locking part 3a and the catcher 2a. Here, the coupling and separation of the locking part 3a and the catcher 2a are performed manually by a worker using a dedicated tool.

In addition, the upper mask 3 may be provided with a hollow cone-shaped portion that is pointed toward an electrode tab T and an electrode lead T, and opening holes 3d, 3e, and 3f provided inside the upper mask 3 may also have a shape that is pointed toward the end 3f of the opening holes 3d, 3e, and 3f. In addition, the upper mask 3 is formed with gas passages 3b and 3c therein so that an inert gas is injected to both sides and supplied to the end 3f of the opening holes 3d, 3e, and 3f. Here, one 3c of the gas passages 3b and 3c receives the inert gas through the base plate 2 and the opened hole 2b (right side in FIG. 1c), and the other one 3b is directly connected to an external tube or hose H to receive the inert gas (left side in FIG. 1c). Then, the inert gas collected toward the end 3f of the opening hole is contact with a welded point W and then is discharged through the opening hole 3e of the upper mask 3 and the opening hole 2c of the base plate 2.

During the welding, melting occurs at the welded point, and spatter S is scattered in the form of small particles. Since the spatter S is attached to a surface of the upper mask 3, as the welding progresses, there is a problem that the spatter is accumulated on the surface of the upper mask 3 to cover the gas passages 3b and 3c, and as a result, it needs to be replaced periodically.

However, in the structure according to the related art, the external tube or hose H for injecting the inert gas may be separately separated, and then, the locking part 3a and the catcher 2a are separated from each other to perform detachment of the upper mask 3, but there is a difference in replacement time according to the skill level of the worker, and there is a problem that a welding process is delayed during the replacement time. Although a magnet is attached to the locking part 3a to easily perform the coupling of the locking part 3a and the catcher 2a by magnetic force, the magnetic force may rather be an obstacle during the separation operation.

Therefore, in the present invention, there is a need to provide a new coupling structure in which the upper mask 3 and the base plate 2 are easily coupled to and separated from each other.

### DISCLOSURE OF THE INVENTION

### TECHNICAL PROBLEM

Therefore, a main object of the present invention is to provide a laser welding device capable of easily coupling and separating an upper mask to/from a base plate.

### TECHNICAL SOLUTION

The present invention for achieving the above object provides a laser welding device according to claim 1, which performs welding of an electrode lead and an electrode tab by irradiating laser so that the laser sequentially passes through an opening hole of a base plate and an opening hole of an upper mask when the electrode lead and the electrode tab are seated on a lower mask in a state in which a laser irradiator, the base plate, and the upper mask are coupled to each other, the laser welding device including: the base plate provided with a coupling tool that protrudes from one surface thereof; and the upper mask provided with a coupling hole through which the coupling tool enters and coupled to the base plate by coupling the coupling tool to the coupling hole, wherein the coupling tool comprises a cylinder which has a hollow shape therein in a longitudinal direction and in which an air hole is punched, a piston which is capable of being slid inside the cylinder in a state of being coupled to a spring and has a section of which a diameter is reduced toward one side thereof, and a ball coupled to the cylinder, and wherein, when the coupling tool enters the inside of the coupling hole, the ball enters a groove formed in an inner circumferential surface of the coupling hole by the piston so as to be prevented from being separated, and when air is injected into the air hole, the piston is slid to separate the ball from the groove.

A flange of which a diameter is expanded may be formed on an end of a side of the piston, at which a diameter is relatively expanded, and the spring may be disposed at one side of the piston, and the air hole may be formed in the cylinder at the other side of the piston with respect to the flange.

According to the present invention, a sleeve is coupled to the upper mask, and the coupling hole and the groove is formed in the sleeve so that the coupling tool is coupled to the sleeve. That is the sleeve may be separately mounted.

At least two coupling tools may be provided on the base plate, and a plurality of coupling holes corresponding to a number of the coupling tools may be formed in the upper mask.

A plurality of balls may be coupled along a circumference of the cylinder.

The upper mask may include a gas passage through which an inert gas moves, and an injection hole through which the inert gas is injected into the gas passage may be formed in the base plate, and when the upper mask is coupled to the base plate, the gas passage and the injection hole may communicate with each other.

The upper mask may include a hollow cone shaped portion that is pointed to be gathered at an end thereof so that the opening hole through which the laser passes communicates at the end that is pointed to be gathered, and the gas passage may be formed to be continued to the opening hole.

The gas passage may be formed to be continued from the inside of a shape surface that forms a shape of the upper mask.

The inert gas injected through the gas passage may be discharged through the opening hole of the base plate and the opening hole of the upper mask.

The inert gas may include nitrogen (N₂).

### ADVANTAGEOUS EFFECTS

In the present invention having the configuration as described above, the detachment of the base plate and the upper mask may be performed by the coupling tool, and since the coupling tool is coupled or separated according to whether the air is injected, the coupling tool may be quickly detachable. Thus, even the unskilled person may more quickly and easily attach and detach the upper mask.

Since the separate sleeve is provided, the sleeve may be added so that the upper mask according to the related art is used as it is.

Since the upper mask has the structure in which the inert gas is supplied through the injection hole of the base plate, there may be unnecessary to couple and separate the separate hose for injecting the inert gas or the external tube, thereby more quickly replace the upper mask.

### BRIEF DESCRIPTION OF THE DRAWINGS

FIG. 1a is a schematic perspective view illustrating an overall shape of a laser welding device.
FIG. 1b is a side view illustrating a shape (above) in which an upper mask according to the related art is separated from the laser welding device of FIG. 1a and a state (below) in which a base plate according to the related art is disposed upside down so that a bottom surface that is in contact with the upper mask is seen.
FIG. 1c is a cross-sectional view illustrating a state in which the upper mask and the base plate according to the related art are coupled to each other.
FIG. 2 is a view illustrating a shape (above) in which an upper mask is separated and a state (below) in which a base plate according to the present invention is disposed upside down so that a bottom surface that is in contact with the upper mask is shown.
FIG. 3 is a cross-sectional view illustrating a portion having a hollow cone shape when the upper mask and the base plate are coupled to each other.
FIG. 4 is a longitudinal cross-sectional view illustrating a coupling tool.
FIG. 5 is a view illustrating a state (i) in which the coupling tool is locked to a sleeve and a state (ii) in which the coupling tool is unlocked from the sleeve.

### MODE FOR CARRYING OUT THE INVENTION

Hereinafter, preferred embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein.

In order to clearly describe the present invention, parts irrelevant to the description are omitted, and the same reference numerals are assigned to the same or similar components throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor can properly define the concept of a term to describe and explain his or her invention in the best ways.

The present invention relates to a laser welding device in which welding of an electrode tab and an electrode lead is performed by irradiating laser from a laser irradiator so that the laser sequentially passes through an opening hole of a base plate and an opening hole of an upper mask when the electrode lead and the electrode tab are seated on a lower mask in a state in which the laser irradiator, the base plate, and the upper mask are coupled to each other from top to bottom as illustrated in FIG. 1, and hereinafter, an embodiment of the present invention will be described in more detail with reference to the accompanying drawings.

That is, like the above-described structure according to the related art, a laser welding device according to the present invention includes a lower mask, a laser irradiator, a base plate 20, and an upper mask 30.

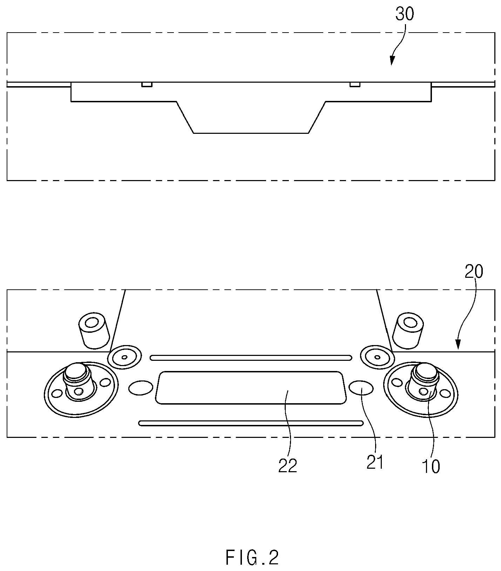

FIG. 2 is a view illustrating a shape (above) in which the upper mask 30 according to the present invention is separated and a state (below) in which the base plate 20 according to the present invention is disposed upside down so that a bottom surface that is in contact with the upper mask 30 is shown.

Instead of the locking part and the catcher according to the related art, in the structure according to the present invention, the upper mask 30 is provided with a coupling hole (a sleeve in which the coupling hole is formed is coupled), and a coupling tool 10 capable of being fixed to the coupling hole is provided on the base plate 20.

That is, the base plate 20 has a structure, in which the coupling tool 10 is mounted on one surface (i.e., a bottom surface when disposed as illustrated in FIG. 1a), to which the upper mask 30 is coupled, to protrude from the surface, and the coupling hole is provided in the upper mask 30.

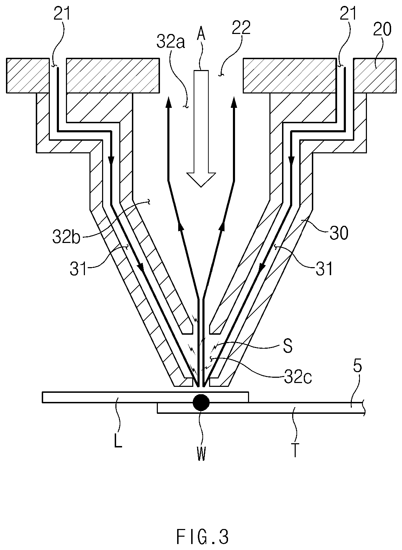

FIG. 3 is a cross-sectional view illustrating a portion having a hollow cone shape when the upper mask 30 and the base plate 20 are coupled to each other. For reference, a portion at which the coupling tool 10 is coupled to the coupling hole is omitted in FIG. 3 as a point disposed outside in FIG. 3.

As illustrated in the drawings, the upper mask 30 is provided with a portion that is formed in the form of a hollow cone shape that is pointed to be gathered at an end thereof, and thus, opening holes 32a, 32b, and 32c into which the laser is irradiated may be formed to communicate with each other at the end at which the opening holes 32a, 32b, and 32c are pointed to be gathered toward a point W to be welded, and a gas passage 31 is also connected to a lower end 32c of the opening holes 32a, 32b, and 32c.

The gas passage 31 is a passage, through which an inert gas moves, and is formed to be continued from the inside of the shape surface forming the shape of the upper mask 30 so that the inert gas is supplied to the point W at which the welding is performed. The shape surface means a portion constituting an outer appearance and having a thickness to form the cone shape in the upper mask 30.

In the upper mask 30, unlike the structure according to the related art, the inert gas may not be directly injected through an external tube or hose H, but may be injected through an injection hole 21 formed in the base plate 20.

That is, the external tube or hose H according to the related art is connected to one side of the injection hole 21 formed in the base plate 20, and when the upper mask 30 is coupled to the base plate, the other side of the injection hole 21 communicates with the gas passage 31 of the upper mask 30.

And, as illustrated in FIG. 3, while the electrode tab T and the electrode lead L are laser-welded to each other, the inert gas injected through the gas passage 31 acts to stabilize the welding at the point W at which the welding is performed and is continuously supplied and then discharged through the opening hole 22 of the base plate 20 and the opening holes 32a, 32b, and 32c of the upper mask 30.

That is, the inert gas injected into the gas passage 31 is discharged through the opening hole 22 of the base plate via a lower end 32c, an intermediate end 32b, and an upper end 32a of the opening hole of the upper mask 30. Here, nitrogen (N₂) may be provided as the inert gas.

In addition, the coupling tool 10 provided in the present invention are disposed outside each of the injection holes 21 at both sides of the base plate 20, as illustrated in FIG. 2.

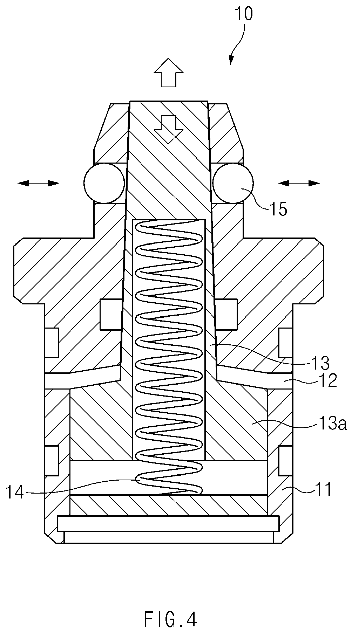

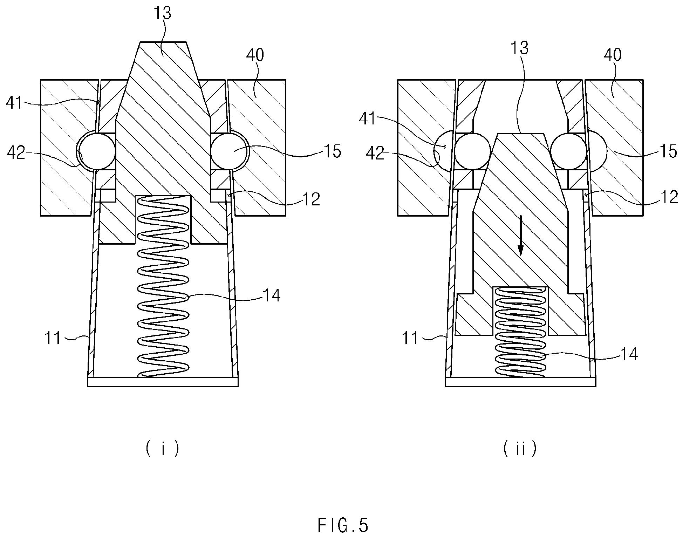

FIG. 4 is a longitudinal cross-sectional view illustrating the coupling tool 10, and FIG. 5 is a view illustrating a state (i) in which the coupling tool 10 is locked to a sleeve 40 and a state (ii) in which the coupling tool 10 is unlocked from the sleeve 40.

The coupling tool 10 is configured so that a piston 13 is coupled inside a cylinder 11, and a ball 15 protrudes from a surface of the cylinder 11 so as to be locked or unlocked according to a sliding position of the piston 13.

Referring to the drawings, the cylinder 11 has a hollow shape in a longitudinal direction, and an air hole 12 is punched at a predetermined height. The air hole 12 allows the inside and outside of the cylinder 11 to communicate with each other.

The piston 13 is slidably mounted inside the cylinder 11 in a state in which one end of the piston 13 is pressed by elastic force. The piston 13 has a shape of which a diameter decreases toward one side, or a section of which a diameter decreases toward one side thereof is formed on at least a portion of the piston 13.

In addition, at least one or more balls 15 are coupled along a circumference of the cylinder 11, preferably a plurality of balls 15 are coupled at regular intervals along the circumference of the cylinder 11. Although not clearly shown in the drawing, the ball 15 is disposed to be coupled and restricted by an elastic body (not shown) so that a portion of the ball 15 is embedded into the cylinder 11, and the ball 15 is behaved to protrude from the surface of the cylinder 11 when the ball is in contact with a portion at which the diameter of the piston 13 is expanded according to the sliding of the piston 13, and to be embedded in an original state when the ball 15 is in contact with a portion at which the diameter of the piston 13 is contracted.

Here, a flange 13a of which a diameter is expanded is disposed on an end (or the intermediate end) of a side of the piston13, at which a diameter is relatively expanded. In addition, a spring 14 is disposed at one side (a lower side in FIG. 4) of the piston 13, and an air hole 12 is formed in the cylinder 11 at the other side (an upper side in FIG. 4) of the piston 13.

The piston 13 has a diameter that gradually increases downward in FIG. 4. Thus, when the piston 13 ascends by the elastic force of the spring 14, the ball 15 is pressed by the piston 13 to protrude outward from the surface of the cylinder 11.

In addition, when compressed air is supplied to the air hole 12, a pressure in a space (in detail, a space opposite to a space in which the spring is disposed when the space inside the cylinder is divided with respect to the flange) inside the cylinder 11 increases. Thus, the piston 13 overcomes the elastic force of the spring 14 to descend, and the ball 15 is restored to be embedded in the original state in the cylinder 11 as the pressure pressed by the piston 13 is released.

In addition, the coupling hole is provided in the upper mask 30 so that the coupling tools 10 enter according to positions at which the coupling tools 10 are disposed, and a groove having a concave shape is formed in an inner circumferential surface of the coupling hole. The sleeve 40 provided with the coupling hole 41 and the groove 42 is provided in a shape coupled to the upper mask 30.

FIG. 5 is a view illustrating a state in which the coupling hole 41 and the groove 42 are provided in a ringshaped sleeve 40 that is separately coupled to the upper mask 30, and the coupling tool 10 is coupled to the sleeve 40.

Referring to FIG. 5, as illustrated at a left side, when the coupling tool 10 enters the coupling hole 41, the ball 15 enters the groove 42 formed in an inner circumferential surface of the coupling hole 41 by the piston 13 so that the coupling tool 10 is restricted to the sleeve 40. Here, since the coupling tool 10 is coupled to the base plate 20 and the sleeve 40 is fixed to the upper mask 30, the base plate 20 and the upper mast 30 are coupled to each other. That is, the coupling tool 10 fixed to the base plate 20 is fitted into the coupling hole 41, and thus, the base plate 20 and the upper mask 30 are coupled to each other in a one-touch manner.

For reference, the piston 13 of FIG. 5 is illustrated as a structure having both the portion of the piston 13 having the constant diameter and the portion of the piston 13 having the variable diameter, but the shape of the piston 13 may vary according to a size of the ball 15 or an inner diameter of the coupling hole 41.

In addition, when the air (compressed air) is injected through the air hole 12, as illustrated at the right side of FIG. 5, the pressure in the space opposite to the spring 14 increases, and thus, the piston 13 is slid in a direction in which the piston 13 is retreated (downward in FIG. 5). Here, since a point at which the diameter of the piston 13 is reduced faces the ball 15, the pressure applied to the ball 15 is released.

Therefore, the coupling tool 10 may be separated from the coupling hole 41, and thus, the base plate 20 and the upper mask 30 may be separated from each other.

In order to properly support a weight of the upper mask 30, it is preferable that the base plate 20 is provided with at least two or more coupling tools 10, and the upper mask 30 has a plurality of coupling holes, which correspond to the number of coupling tools 10. In addition, it is preferable to have a structure in which the plurality of balls 15 are disposed along the circumference of the cylinder 11 so that the coupling tool 10 is restricted more efficiently.

In the present invention having the configuration as described above, the detachment of the base plate 20 and the upper mask 30 is performed by the coupling tool 10, and since the coupling tool 10 is coupled or separated according to whether the air is injected, the coupling tool 10 is quickly detachable. Thus, even the unskilled person may more quickly and easily attach and detach the upper mask.

Since the separate sleeve 40 is provided, the sleeve 40 may be added so that the upper mask according to the related art is used as it is.

Since the upper mask 30 has the structure in which the inert gas is supplied through the injection hole of the base plate 20, there may be unnecessary to couple and separate the separate hose H for injecting the inert gas or the external tube, thereby more quickly replace the upper mask.

### [Description of the Symbols]

- 10:: Coupling tool
- 20:: Base plate
- 30:: Upper mask
- 40:: Sleeve

## Claims

1. A laser welding device, comprising a laser irradiator, a base plate (20) having an opening hole, and an upper mask (30) having an opening hole, the laser welding device (10) being configured for performing the welding of an electrode lead and an electrode tab by irradiating laser so that, in use, the laser sequentially passes through the opening hole of the base plate (20) and the opening hole of the upper mask (30) when the electrode lead and the electrode tab are seated on a lower mask in a state in which the laser irradiator, the base plate (20), and the upper mask (30) are coupled to each other,
the laser welding device (10) being **characterised by**:
a sleeve (40) being coupled to the upper mask (30),
the base plate (20) being provided with a coupling tool (10; that protrudes from one surface thereof; and
the sleeve (40) being provided with a coupling hole (41) through which the coupling tool (10) enters and coupled to the base plate (20) by coupling the coupling tool (10) to the coupling hole (41),
wherein the coupling tool (10) comprises a cylinder (11) which has a hollow shape therein in a longitudinal direction and in which an air hole (12) is punched, a piston (13) which is capable of being slid inside the cylinder (11) in a state of being coupled to a spring (14) and has a section of which a diameter is reduced toward one side thereof, and a ball (15) coupled to the cylinder (11), and
wherein, when the coupling tool (10) enters the inside of the coupling hole (41), the ball (15) enters a groove (42) formed in an inner circumferential surface of the coupling hole (41) by the piston (13) so as to be prevented from being separated, and when air is injected into the air hole (12), the piston (13) is slid to separate the ball (15) from the groove (42).

2. The laser welding device of claim 1, wherein a flange (13a) of which a diameter is expanded is formed on an end of a side of the piston (13), at which a diameter is relatively expanded, and
the spring (14) is disposed at one side of the piston (13), and the air hole (12) is formed in the cylinder (11) at the other side of the piston (13) with respect to the flange (13a).

3. The laser welding device of claim 1, wherein at least two coupling tools (10) are provided on the base plate (20), and a plurality of coupling holes (41) corresponding to a number of the coupling tools (10) are formed in the upper mask (30).

4. The laser welding device of claim 1, wherein a plurality of balls (15) are coupled along a circumference of the cylinder (11).

5. The laser welding device of claim 1, wherein the upper mask (30) comprises a gas passage (3b, 3c) through which an inert gas moves, and an injection hole (21) through which the inert gas is injected into the gas passage is formed in the base plate (20), and
when the upper mask (30) is coupled to the base plate (20), the gas passage (3b, 3c) and the injection hole (21) communicate with each other.

6. The laser welding device of claim 5, wherein the upper mask (30) comprises a hollow cone shaped portion that is pointed to be gathered at an end thereof so that the opening hole (32a, 32b, 32c) through which the laser passes communicates at the end that is pointed to be gathered, and
the gas passage (31) is formed to be continued to the opening hole (32a, 32b, 32c).

7. The laser welding device of claim 6, wherein the gas passage (31) is formed to be continued from the inside of a shape surface that forms a shape of the upper mask (30).

8. The laser welding device of claim 7, wherein the inert gas injected through the gas passage (31) is discharged through the opening hole (22) of the base plate (20) and the opening hole (22) of the upper mask (30).

9. The laser welding device of claim 5, wherein the inert gas comprises nitrogen.

## Patentansprüche

1. Laserschweißvorrichtung, umfassend einen Laserstrahler, eine Grundplatte (20), welche ein Öffnungsloch aufweist, und eine obere Maske (30), welche ein Öffnungsloch aufweist, wobei die Laserschweißvorrichtung (10) dazu eingerichtet ist, das Schweißen einer Elektrodenleitung und einer Elektrodenlasche durch Bestrahlen mit einem Laser derart durchzuführen, dass, bei einer Verwendung, der Laser nacheinander durch das Öffnungsloch der Grundplatte (20) und das Öffnungsloch der oberen Maske (30) verläuft, wenn die Elektrodenleitung und die Elektrodenlasche an einer unteren Maske gelagert sind, in einem Zustand, in welchem der Laserstrahler, die Grundplatte (20) und die obere Maske (30) miteinander gekoppelt sind, wobei die Laserschweißvorrichtung (10) **gekennzeichnet ist durch**:
eine Hülse (40), welche mit der oberen Maske (30) gekoppelt ist,
wobei die Grundplatte (20) mit einem Kopplungswerkzeug (10) bereitgestellt ist, welches von einer Fläche davon vorsteht; und
die Hülse (40) mit einem Kopplungsloch (41) bereitgestellt ist, **durch** welches das Kopplungswerkzeug (10) eintritt und mit der Grundplatte (20), **durch** Koppeln des Kopplungswerkzeugs (10) mit dem Kopplungsloch (41), gekoppelt ist,
wobei das Kopplungswerkzeug (10) einen Zylinder (11), welcher eine hohle Form darin in einer longitudinalen Richtung aufweist und in welchem ein Luftloch (12) gestanzt ist, einen Kolben (13), welcher dazu in der Lage ist innerhalb des Zylinders (11) verschoben zu werden, in einem Zustand, in welchem er mit einer Feder (14) gekoppelt ist und einen Bereich aufweist, von welchem ein Durchmesser zu einer Seite hin reduziert ist, und eine Kugel (15) umfasst, welche mit dem Zylinder (11) gekoppelt ist, und
wobei, wenn das Kopplungswerkzeug (10) in das Innere des Kopplungslochs (41) eintritt, die Kugel (15) in eine Nut (42) eintritt, welche in einer inneren Umfangsfläche des Kopplungslochs (41) **durch** den Kolben (13) gebildet ist, sodass es verhindert ist, dass sie getrennt werden, und wenn Luft in das Luftloch (12) injiziert wird, der Kolben (13) verschoben wird, um die Kugel (15) von der Nut (42) zu trennen.

2. Laserschweißvorrichtung nach Anspruch 1, wobei ein Flansch (13a), von welchem ein Durchmesser vergrößert ist, an einem Ende einer Seite des Kolbens (13) gebildet ist, an welcher ein Durchmesser relativ vergrößert ist, und
die Feder (14) an einer Seite des Kolbens (13) angeordnet ist, und das Luftloch (12) in dem Zylinder (11) an der anderen Seite des Kolbens (13) in Bezug auf den Flansch (13a) gebildet ist.

3. Laserschweißvorrichtung nach Anspruch 1, wobei wenigstens zwei Kopplungswerkzeuge (10) an der Grundplatte (20) bereitgestellt sind und eine Mehrzahl von Kopplungslöchern (41), welche einer Anzahl der Kopplungswerkzeuge (10) entsprechen, in der oberen Maske (30) gebildet sind.

4. Laserschweißvorrichtung nach Anspruch 1, wobei eine Mehrzahl von Kugeln (15) entlang eines Umfangs des Zylinders (11) gekoppelt sind.

5. Laserschweißvorrichtung nach Anspruch 1, wobei die obere Maske (30) einen Gasdurchgang (3b, 3c) umfasst, durch welchen sich ein Schutzgas bewegt, und ein Injektionsloch (21), durch welches das Schutzgas in den Gasdurchgang injiziert wird, in der Grundplatte (20) gebildet ist, und
wobei, wenn die obere Maske (30) mit der Grundplatte (20) gekoppelt ist, der Gasdurchgang (3b, 3c) und das Injektionsloch (21) miteinander kommunizieren.

6. Laserschweißvorrichtung nach Anspruch 5, wobei die obere Maske (30) einen hohlen konisch förmigen Abschnitt umfasst, welcher zugespitzt ist, um an einem Ende davon zusammenzulaufen, sodass das Öffnungsloch (32a, 32b, 32c), durch welches der Laser durchläuft, an dem Ende kommuniziert, welches zugespitzt ist, um zusammenzulaufen, und
der Gasdurchgang (31) derart gebildet ist, dass er bis zu dem Öffnungsloch (32a, 32b, 32c) fortgesetzt ist.

7. Laserschweißvorrichtung nach Anspruch 6, wobei der Gasdurchgang (31) derart gebildet ist, dass er von der Innenseite einer Formfläche fortgesetzt ist, welche eine Form der oberen Maske (30) bildet.

8. Laserschweißvorrichtung nach Anspruch 7, wobei das Schutzgas, welches durch den Gasdurchgang (31) injiziert ist, durch das Öffnungsloch (22) der Grundplatte (20) und das Öffnungsloch (22) der oberen Maske (30) abgelassen wird.

9. Laserschweißvorrichtung nach Anspruch 5, wobei das Schutzgas Stickstoff umfasst.

## Revendications

1. Dispositif de soudage au laser, comprenant un dispositif d'irradiation laser, une plaque de base (20) présentant un trou d'ouverture, et un masque supérieur (30) présentant un trou d'ouverture, le dispositif de soudage au laser (10) étant configuré pour réaliser le soudage d'un fil d'électrode et d'une languette d'électrode par irradiation laser de sorte que, lors de l'utilisation, le laser passe séquentiellement à travers le trou d'ouverture de la plaque de base (20) et le trou d'ouverture du masque supérieur (30) lorsque le fil d'électrode et la languette d'électrode sont placés sur un masque inférieur dans un état dans lequel le dispositif d'irradiation laser, la plaque de base (20) et le masque supérieur (30) sont couplés les uns aux autres,
le dispositif de soudage au laser (10) étant **caractérisé par** :
un manchon (40) étant couplé au masque supérieur (30),
la plaque de base (20) étant dotée d'un outil de couplage (10) qui fait saillie à partir d'une surface de celle-ci ; et
le manchon (40) étant doté d'un trou de couplage (41) à travers lequel l'outil de couplage (10) pénètre et est couplé à la plaque de base (20) en couplant l'outil de couplage (10) au trou de couplage (41),
dans lequel l'outil de couplage (10) comprend un cylindre (11) qui présente une forme creuse dans celui-ci dans une direction longitudinale et dans lequel un trou d'air (12) est percé, un piston (13) qui est apte à coulisser à l'intérieur du cylindre (11) dans un état de couplage à un ressort (14) et présente une section dont un diamètre est réduit vers un côté de celui-ci, et une bille (15) couplée au cylindre (11), et
dans lequel, lorsque l'outil de couplage (10) pénètre à l'intérieur du trou de couplage (41), la bille (15) pénètre dans une rainure (42) formée dans une surface circonférentielle interne du trou de couplage (41) par le piston (13) de manière à empêcher toute séparation, et lorsque de l'air est injecté dans le trou d'air (12), le piston (13) coulisse pour séparer la bille (15) de la rainure (42).

2. Dispositif de soudage au laser selon la revendication 1, dans lequel une bride (13a) dont un diamètre est élargi est formée sur une extrémité d'un côté du piston (13), au niveau de laquelle un diamètre est relativement élargi, et
le ressort (14) est disposé sur un côté du piston (13), et le trou d'air (12) est formé dans le cylindre (11) sur l'autre côté du piston (13) par rapport à la bride (13a).

3. Dispositif de soudage au laser selon la revendication 1, dans lequel au moins deux outils de couplage (10) sont prévus sur la plaque de base (20), et une pluralité de trous de couplage (41) correspondant à un certain nombre des outils de couplage (10) sont formés dans le masque supérieur (30).

4. Dispositif de soudage au laser selon la revendication 1, dans lequel une pluralité de billes (15) sont couplées le long d'une circonférence du cylindre (11).

5. Dispositif de soudage au laser selon la revendication 1, dans lequel le masque supérieur (30) comprend un passage de gaz (3b, 3c) à travers lequel un gaz inerte se déplace, et un trou d'injection (21) à travers lequel le gaz inerte est injecté dans le passage de gaz est formé dans la plaque de base (20), et
lorsque le masque supérieur (30) est couplé à la plaque de base (20), le passage de gaz (3b, 3c) et le trou d'injection (21) communiquent entre eux.

6. Dispositif de soudage au laser selon la revendication 5, dans lequel le masque supérieur (30) comprend une partie en forme de cône creux qui est orientée pour être rassemblée à une extrémité de celui-ci de sorte que le trou d'ouverture (32a, 32b, 32c) à travers lequel passe le laser communique à l'extrémité qui est orientée pour être rassemblée, et
le passage de gaz (31) est formé de manière à s'étendre jusqu'au trou d'ouverture (32a, 32b, 32c).

7. Dispositif de soudage au laser selon la revendication 6, dans lequel le passage de gaz (31) est formé pour être continué depuis l'intérieur d'une surface de forme qui forme une forme du masque supérieur (30).

8. Dispositif de soudage au laser selon la revendication 7, dans lequel le gaz inerte injecté à travers le passage de gaz (31) est évacué à travers le trou d'ouverture (22) de la plaque de base (20) et le trou d'ouverture (22) du masque supérieur (30).

9. Dispositif de soudage au laser selon la revendication 5, dans lequel le gaz inerte comprend de l'azote.
